# EUROPÄISCHE PATENTSCHRIFT

(11) **EP 3 416 865 B1**
(45) Veröffentlichungstag und Bekanntmachung des Hinweises auf die Patenterteilung: **01.01.2020**
(21) Anmeldenummer: 16798159.6
(22) Anmeldetag: 17.11.2016
(51) Int. Cl.: B61B 12/02, F16H 1/30

(54) **VORRICHTUNG ZUR BEWEGUNG VON SEILBAHNFAHRZEUGEN IN EINER SEILBAHNANLAGE**
APPARATUS FOR MOVING ROPEWAY VEHICLES IN A ROPEWAY SYSTEM
DISPOSITIF DE CIRCULATION DES VÉHICULES TÉLÉPHÉRIQUES DANS UNE INSTALLATION DE TÉLÉPHÉRIQUE

(30) Priorität: 18.02.2016 AT 852016
(43) Veröffentlichungstag der Anmeldung: 26.12.2018
(73) Patentinhaber: Innova Patent GmbH, 6922 Wolfurt (AT)
(72) Erfinder: MORITZHUBER, Johannes, 6971 Hard (AT)
(74) Vertreter: Beer & Partner Patentanwälte KG
(86) Internationale Anmeldenummer: PCT/EP2016/078073
(87) Internationale Veröffentlichungsnummer: WO 2017/140389

(56) Entgegenhaltungen:
- EP-A1- 0 774 392
- EP-A1- 1 997 706
- EP-A2- 1 024 069

## Beschreibung

Die gegenständliche Erfindung betrifft eine Vorrichtung zur Bewegung von Seilbahnfahrzeugen in einer Seilbahnanlage mit mindestens einem Förderrad, welches mittels einer Hubeinrichtung gegenüber den Seilbahnfahrzeugen höhenverstellbar ist, um an diese zur Anlage gebracht zu werden, wodurch diese mittels des mindestens einen Förderrades längs einer Fahrbahn verfahrbar sind.

Es ist bekannt, Seilbahnanlagen mit Speicheranlagen auszubilden, in welchen die Seilbahnfahrzeuge gespeichert werden können, wobei diese Speicherung insbesondere außerhalb der Betriebszeiten erfolgt. Es sind dies sogenannte Garagen für Seilbahnfahrzeuge, in welchen die Seilbahnfahrzeuge, z.B. nach Beendigung des Betriebes der Seilbahnanlage, auf Speicherschienen verfahren und eng aneinander angeordnet werden. Um diese Speicherung vornehmen zu können, müssen die den Speicherschienen zugeordneten Förderräder in vertikaler Richtung verstellbar sein.

In der unteren Endlage befinden sich die Förderräder in Anlage an Antriebsflächen, welche an den Seilbahnfahrzeugen vorgesehen sind, wodurch die Seilbahnfahrzeuge mittels der Förderräder längs der Speicherschienen verfahren werden können. In der oberen Endlage befinden sich die Förderräder von den Antriebsflächen der Seilbahnfahrzeuge im Abstand, wodurch die Seilbahnfahrzeuge durch die Förderräder nicht verfahren werden können.

Es wird hierzu z.B. auf die EP 774392 A1 verwiesen, in welcher die Ausbildung und Wirkungsweise einer derartigen Speicheranlage erläutert ist.

Bei bekannten derartigen Speicheranlagen erfolgt die Höhenverstellung der Förderräder mittels einer Hubeinrichtung, welche hydraulisch oder pneumatisch betrieben wird. Derartige Hubeinrichtungen entsprechen jedoch deshalb nicht den an sie gestellten technischen Erfordernissen, da sie einen großen Wartungsaufwand bedingen.

Um diesen Nachteil zu vermeiden, kann eine elektrische Hubeinrichtung vorgesehen werden, welche mit einem Elektromotor und mit einer höhenverstellbaren Hubspindel ausgebildet ist. Bei einer derartigen Hubeinrichtung muss jedoch gewährleistet werden, dass bei Erreichen der oberen Endlage bzw. der unteren Endlage der Hubspindel die Stellbewegung abgestellt wird, ohne dass Verrastungen oder Verkeilungen der aneinander zur Anlage kommenden Flächen auftreten, da es ansonsten Schwierigkeiten bedingt, Rückverstellungen der Hubspindel zu bewirken.

Der gegenständlichen Erfindung liegt somit die Aufgabe zugrunde, eine elektrische Hubeinrichtung zu schaffen, bei welcher in den Endlagen der Hubspindel Verrastungen bzw. Verkeilungen der aneinander zur Anlage kommenden Bauteile ausgeschlossen werden. Dies wird erfindungsgemäß dadurch erzielt, dass eine elektrische Hubeinrichtung vorgesehen ist, welche mit einem elektrischen Antriebsmotor, mit einer durch diesen verdrehbaren und in ihrer Höhenlage gehaltenen Gewindemuffe und mit einer durch die Gewindemuffe höhenverstellbaren Hubspindel, durch welche das mindestens eine Förderrad höhenverstellbar ist, ausgebildet ist, wobei die Gewindemuffe und die Hubspindel an den einander zugeordneten, in ihrer Betriebslage oberen und unteren Stirnflächen mit zumindest angenähert in Normalebenen auf die Drehrichtung der Gewindemuffe liegenden Anschlägen ausgebildet sind, welche in der oberen bzw. der unteren Endlage der Hubspindel aneinander zur Anlage kommen, wodurch eine weitere Verdrehung der Gewindemuffe verhindert wird.

Vorzugsweise ist die Hubspindel mit zwei voneinander im Abstand befindlichen, mit Profilierungen versehenen Anschlagscheiben ausgebildet, zwischen welchen sie mit einem Außengewinde ausgebildet ist, mit welchen sie in einer Gewindebohrung der Gewindemuffe geführt ist, und ist die Gewindemuffe mit den Profilierungen der Anschlagscheiben zugeordneten Profilierungen ausgebildet. Dabei kann die Gewindemuffe mit axialen Fortsätzen ausgebildet sein, welche mit Profilierungen ausgebildet sind. Vorzugsweise sind die einander zugewandten Stirnflächen der Anschlagscheiben und der Fortsätze der Gewindemuffe mit sich radial erstreckenden Profilierungen ausgebildet, welche mit in zumindest angenähert in Normalebenen auf die Drehrichtung der Gewindemuffe befindlichen Anschlagflächen versehen sind. Weiters ist vorzugsweise die Hubspindel mit einem im Querschnitt polygonalen Sicherungsbolzen ausgebildet, welcher in einer gegengleich profilierten Durchbrechung einer Sicherungsplatte geführt ist, wodurch die Hubspindel gegenüber einer Verdrehung gesichert ist. Zudem ist vorzugsweise die Gewindemuffe als Schneckenrad ausgebildet, welches mit einer Antriebsspindel des Antriebsmotors zusammenwirkt.

Weiters ist vorzugsweise die elektrische Wicklung des Antriebsmotors mit einem in der Speiseleitung des Antriebsmotors befindlichen Thermokontakt ausgebildet, welcher bei Überschreiten eines thermischen Grenzwertes im Antriebsmotor geöffnet wird, wodurch der Antriebsmotor abgeschaltet wird.

Eine erfindungsgemäße Hubeinrichtung ist nachstehend anhand eines in der Zeichnung dargestellten Ausführungsbeispieles näher erläutert. Es zeigen:
- FIG.1: eine erfindungsgemäße elektrische Hubeinrichtung, wobei sich die Hubspindel in ihrer unteren Endlage befindet, in Seitenansicht,
- FIG.1A: die elektrische Hubeinrichtung, wobei sich die Hubspindel in ihrer oberen Endlage befindet, in Seitenansicht,
- FIG.2: den Antrieb der Hubeinrichtung, in axonometrischer Darstellung,
- FIG.3: den Antrieb der Hubeinrichtung, wobei sich die Hubspindel in ihrer unteren Endlage befindet, in Seitenansicht sowie teilweise im Schnitt, und
- FIG.3A: den Antrieb der Hubeinrichtung, wobei sich die Hubspindel in ihrer oberen Endlage befindet, in Seitenansicht sowie teilweise im Schnitt.

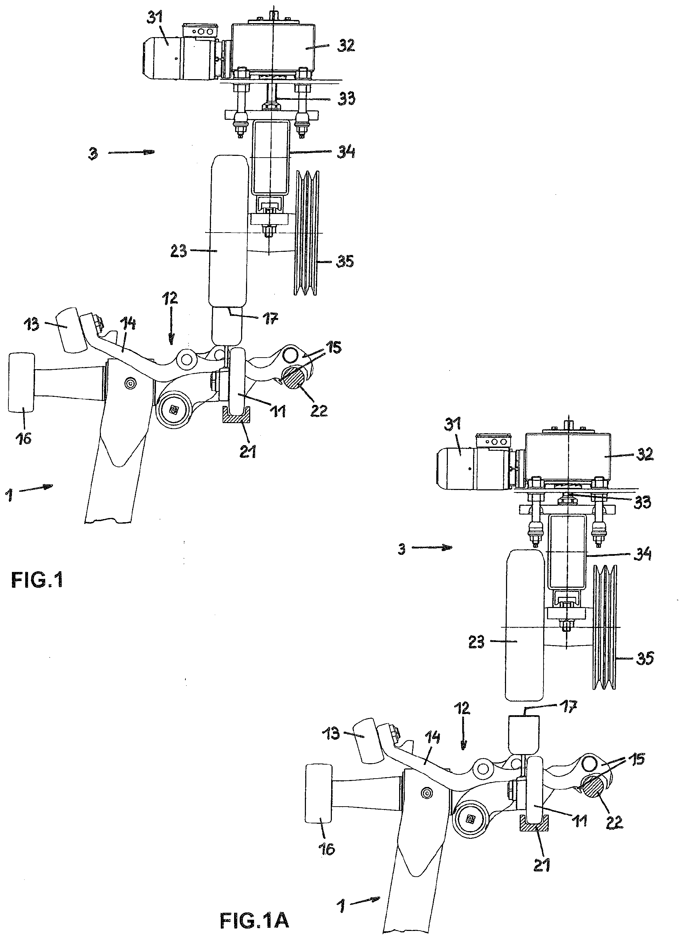

In den FIG.1 und FIG.1A sind die oberen Bestandteile eines Seilbahnfahrzeuges 1 dargestellt. Es sind dies einerseits ein Laufwerk mit mindestens einer Laufrolle 11, welche längs einer Führungsschiene 21 verfahrbar ist, und andererseits eine Klemmeinrichtung 12, mittels welcher das Seilbahnfahrzeug 1 an ein Förderseil 22 anklemmbar ist. Die Klemmeinrichtung 12 ist mit einer Stellrolle 13, mit einem Stellhebel 14 mit Klemmbacken 15 und mit einer Stützrolle 16 ausgebildet. Weiters ist das Seilbahnfahrzeug 1 mit einer Antriebsfläche 17 ausgebildet, an welche in ihrer Höhenlage verstellbare Förderräder 23 zur Bewegung der Seilbahnfahzeuge 1 durch eine Seilbahnstation hindurch bzw. zu deren Bewegung in einer Garage zur Anlage gebracht werden können.

Hierfür ist eine Hubeinrichtung 3 vorgesehen, durch welche die Förderräder 23 in die in FIG.1 dargestellte untere Endlage, in welcher sie an die Antriebsfläche 17 anliegen bzw. in die in FIG.1A dargestellte obere Endlage, in welcher sie von der Antriebsfläche 17 abgehoben sind, verstellbar sind.

Die Hubeinrichtung 3 weist einen elektrischen Antriebsmotor 31 auf, durch welchen über ein in einem Gehäuse 32 befindliches Getriebe eine Stellstange 33 höhenverstellbar ist. Die Stellstange 33 ist mit einem Tragbalken 34 starr verbunden, an welchen einerseits eine Gruppe von Förderrädern 23 und andererseits Riemenscheiben 35, durch welche die Förderräder 23 mittels Riemengetrieben verdrehbar sind, gelagert sind.

In FIG.1 sind die Förderräder 23 mittels der Hubeinrichtung 3 in ihre untere Endlage verstellt, wodurch sie an die Antriebsflächen 17 anliegen, sodass die Seilbahnfahrzeuge 1 längs einer Fahrbahn in Form der Führungsschiene 21 verfahren werden können. Demgegenüber befinden sich in FIG.1A die Förderräder 23 in ihrer oberen Endlage, wodurch sie von den Antriebsflächen 17 abgehoben sind, sodass die Seilbahnfahrzeuge 1 nicht verfahren werden können.

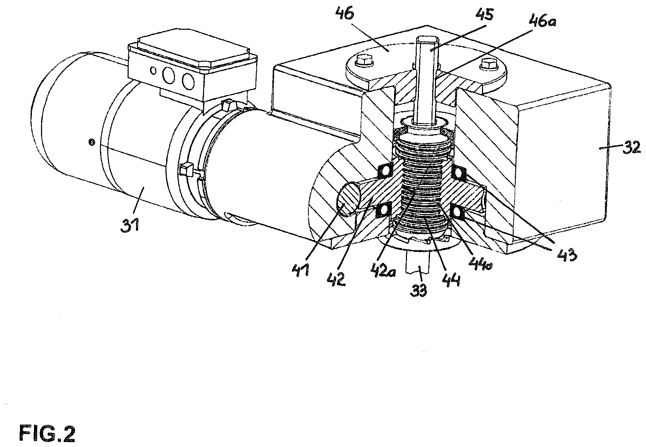

Nachstehend ist anhand der FIG.2 der Antrieb der Hubeinrichtung 3 erläutert: Dieser Antrieb weist den elektrischen Antriebsmotor 31 auf, durch welchen eine Antriebsspindel 41 verdrehbar ist. Im Gehäuse 32 befindet sich eine Gewindemuffe in Form eines Schneckenrades 42, welches zwischen zwei im Gehäuse 32 in der Betriebslage in vertikalem Abstand voneinander befindlichen Lagern 43 gelagert ist. Durch die Antriebsspindel 41, welche mit dem Schneckenrad 42 kämmt, ist dieses um eine zumindest angenähert vertikale Achse verdrehbar. Das Schneckenrad 42 ist mit einer mittigen Gewindebohrung 42a ausgebildet, in welcher eine Hubspindel 44 geführt ist, welche mit einem Außengewinde 44a ausgebildet ist.

An ihrem oberen Ende ist die Hubspindel 44 mit einem im Querschnitt polygonalen Sicherungsbolzen 45 ausgebildet, welcher eine am Gehäuse 32 befestigte Sicherungsplatte 46 in einer gleichfalls polygonal ausgebildeten Durchbrechung 46a durchsetzt, wodurch die Hubspindel 44 gegenüber einer Verdrehung gesichert ist.

Durch eine Verdrehung des Schneckenrades 42 wird die Hubspindel 44 in vertikaler Richtung verstellt. Bei der Verstellung der Hubspindel 44 innerhalb des Schneckenrades 42 in vertikaler Richtung muss gewährleistet werden, dass dann, sobald die Hubspindel 44 in die obere Endlage bzw. in die untere Endlage gelangt, der Antrieb abgestellt wird, um zu verhindern, dass sich die einander gegenüber liegenden Flächen des Schneckenrades 42 und der Hubspindel 44 miteinander verrasten bzw. verkeilen.

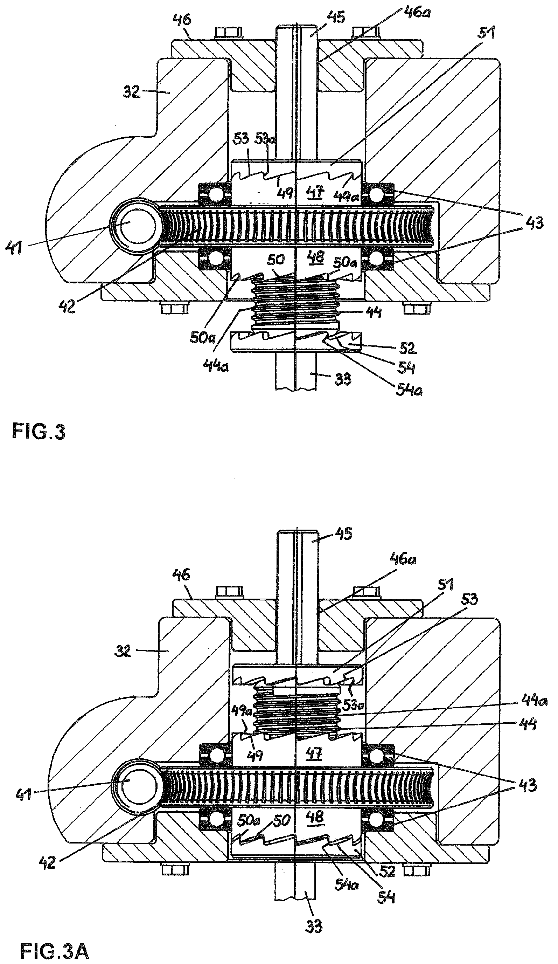

Wie dies aus den FIG.3 und FIG.3A ersichtlich ist, befinden sich im Gehäuse 32 die Lager 43 für das Schneckenrad 42, welches durch die Antriebsspindel 41 um eine zumindest angenähert vertikale Achse verdrehbar ist. In der Gewindebohrung 42a des Schneckenrades 42 ist die Hubspindel 44 geführt, wobei sie durch eine Verdrehung des Schneckenrades 42 nach unten oder nach oben verstellt wird.

In FIG.3 ist die untere Endlage der Hubspindel 44 dargestellt und in FIG.3A ist die obere Endlage der Hubspindel 44 dargestellt. Hierbei sind die Förderräder 23 in die in den FIG.1 und FIG.1A dargestellten Endlagen verstellt.

Das Schneckenrad 42 ist mit axialen Fortsätzen 47 und 48 ausgebildet, welche an der oberen Stirnfläche bzw. an der unteren Stirnfläche mit sich zumindest angenähert radial erstreckenden rippenartigen Profilierungen 49 bzw. 50 ausgebildet sind, durch welche Anschlagflächen 49a und 50a gebildet sind, welche in Normalebenen auf die Drehrichtung des Schneckenrades 42 liegen. Die Hubspindel 44 ist im Bereich des Schneckenrades 42 mit einer oberen Anschlagscheibe 51 und mit einer unteren Anschlagscheibe 52 ausgebildet, welche beiden Anschlagscheiben 51 bzw. 52 an ihren den axialen Fortsätzen 47 bzw. 48 zugeordneten Stirnflächen gleichfalls mit sich zumindest angenähert radial erstreckenden rippenartigen Profilierungen 53 bzw. 54 versehen sind, welche mit Anschlagflächen 53a und 54a ausgebildet sind, welche gleichfalls in Normalebenen auf die Drehrichtung des Schneckenrades 42 liegen.

Bei einer Verstellung der Hubspindel 44 in eine ihrer beiden Endlagen kommen die Anschlagflächen 53a und 54a, welche sich an den Anschlagscheiben 51 und 52 der Hubspindel 44 befinden, an die Anschlagflächen 49a bzw. 50a der Fortsätze 47 bzw. 48 zur Anlage. Hierdurch wird eine weitere Verdrehung des Schneckenrades 42 und damit auch der Antriebsspindel 41 verhindert, wodurch der Antriebsmotor 31 abgestellt wird. Hierdurch wird ausgeschlossen, dass sich das Schneckenrad 42 und die Hubspindel 44 ineinander verkeilen. Dadurch kann in der Folge ohne jegliche Schwierigkeiten eine Verstellung der Hubspindel 44 in die andere Endstellung vorgenommen werden.

Da das Schneckenrad 42 in der oberen Endlage bzw. in der unteren Endlage in seiner Verdrehung blockiert wird, kann durch der Antriebsmotor 31 im Gewinde der Hubspindel 44 keine Vorspannung aufgebaut werden. Der Antriebsmotor 31 ist so ausgelegt, dass er blockieren kann. Die gesamte Hubzeit der Hubspindel 44 von der unteren Endlage in die obere Endlage ist auf etwa 3 sec ausgelegt. Da in der elektrischen Steuerung hierzu festgelegt ist, dass die Stromzufuhr nach 5 sec unterbrochen wird, kann auch keine thermische Überlastung des Antriebsmotors 31 erfolgen. Zur zusätzlichen Sicherheit ist die elektrische Wicklung des Antriebsmotors 31 mit einem in der Speiseleitung des Antriebsmotors 31 befindlichen Thermokontakt ausgebildet, welcher bei Überschreiten eines thermischen Grenzwertes im Antriebsmotor 31 geöffnet wird, wodurch der Antriebsmotor 31 gleichfalls abgeschaltet wird.

In diesem Ausführungsbeispiel befinden sich die Antriebsspindel 41 des Elektromotors 31 und die Hubspindel 44 im rechten Winkel zueinander, wobei sie über ein Winkelgetriebe miteinander gekuppelt sind. Diese räumliche Anordnung ist jedoch für die erfindungsgemäße konstruktive Gestaltung unmaßgeblich. So kann z.B. die Antriebsspindel des Antriebsmotors zur Hubspindel parallel ausgerichtet sein, wobei die Antriebskupplung über ein Antriebsritzel erfolgt.

## Patentansprüche

1. Vorrichtung zur Bewegung von Seilbahnfahrzeugen (1) in einer Seilbahnanlage mit mindestens einem Förderrad (23), welches mittels einer Hubeinrichtung (3) gegenüber den Seilbahnfahrzeugen (1) höhenverstellbar ist, um an diese zur Anlage gebracht zu werden, wodurch diese mittels des mindestens einen Förderrades (23) längs einer Fahrbahn (21) verfahrbar sind, **dadurch gekennzeichnet, dass** eine elektrische Hubeinrichtung (3) vorgesehen ist, welche mit einem elektrischen Antriebsmotor (31), mit einer durch diesen verdrehbaren und in ihrer Höhenlage gehaltenen Gewindemuffe (42) und mit einer durch die Gewindemuffe (42) höhenverstellbaren Hubspindel (44), durch welche das mindestens eine Förderrad (23) höhenverstellbar ist, ausgebildet ist, wobei die Gewindemuffe (42) und die Hubspindel (44) an den einander zugeordneten oberen und unteren Stirnflächen mit zumindest angenähert in Normalebenen auf die Drehrichtung der Gewindemuffe (42) liegenden Anschlägen (49a, 50a, 53a, 54a) ausgebildet sind, welche in der oberen bzw. der unteren Endlage der Hubspindel (44) aneinander zur Anlage kommen, wodurch eine weitere Verdrehung der Gewindemuffe (42) verhindert wird.

2. Vorrichtung nach Anspruch 1, **dadurch gekennzeichnet, dass** die Hubspindel (44) mit zwei voneinander im Abstand befindlichen, mit Profilierungen (53, 54) versehenen Anschlagscheiben (51, 52) ausgebildet ist, zwischen welchen sie mit einem Außengewinde (44a) ausgebildet ist, mit welchen sie in einer Gewindebohrung (42a) der Gewindemuffe (42) geführt ist, und dass die Gewindemuffe (42) mit den Profilierungen (53, 54) der Anschlagscheiben (51, 52) zugeordneten Profilierungen (49, 50) ausgebildet ist.

3. Vorrichtung nach einem der Ansprüche 1 und 2, **dadurch gekennzeichnet, dass** die Gewindemuffe (42) mit axialen Fortsätzen (47, 48) ausgebildet ist, welche mit Profilierungen (49, 50) ausgebildet sind.

4. Vorrichtung nach Anspruch 3, **dadurch gekennzeichnet, dass** die einander zugewandten Stirnflächen der Anschlagscheiben (51, 52) und der Fortsätze (47, 48) der Gewindemuffe (42) mit sich radial erstreckenden Profilierungen (53, 54, 49, 50) ausgebildet sind, welche mit in zumindest angenähert in Normalebenen auf die Drehrichtung der Gewindemuffe (42) befindliche Anschlagflächen (53a, 54a, 49a, 50a) versehen sind.

5. Vorrichtung nach einem der Ansprüche 1 bis 4, **dadurch gekennzeichnet, dass** die Hubspindel (44) mit einem im Querschnitt polygonalen Sicherungsbolzen (45) ausgebildet ist, welcher in einer gegengleich profilierten Durchbrechung (46a) einer Sicherungsplatte (46) geführt ist.

6. Vorrichtung nach einem der Ansprüche 1 bis 5, **dadurch gekennzeichnet, dass** die Gewindemuffe (42) als Schneckenrad ausgebildet ist, welches mit einer Antriebsspindel (41) des Antriebsmotors (31) zusammenwirkt.

7. Vorrichtung nach einem der Ansprüche 1 bis 6, **dadurch gekennzeichnet, dass** die elektrische Wicklung des Antriebsmotors (31) mit einem in der Speiseleitung des Antriebsmotors (31) befindlichen Thermokontakt ausgebildet ist, welcher bei Überschreiten eines thermischen Grenzwertes im Antriebsmotor (31) geöffnet wird, wodurch der Antriebsmotor (31) abgeschaltet wird.

## Claims

1. Apparatus for moving ropeway vehicles (1) in a ropeway system, comprising at least one conveying wheel (23) which, by means of a lifting device (3), is height-adjustable relative to the ropeway vehicles (1) in order to be brought to bear against the latter, as a result of which said vehicles (1) can be moved along a track (21) by means of the at least one conveying wheel (23), **characterized in that** an electric lifting device (3) is provided which is configured with an electric drive motor (31), with a threaded sleeve (42) which is held in its height position and which can be rotated by said drive motor (31), and with a lifting spindle (44) which is height-adjustable by means of the threaded sleeve (42) and by means of which the at least one conveying wheel (23) is height-adjustable, wherein the threaded sleeve (42) and the lifting spindle (44) are configured with stops (49a, 50a, 53a, 54a) on the associated upper and lower end faces, said stops (40a, 50a, 53a, 54a) being located at least approximately in planes normal to the direction of rotation of the threaded sleeve (42) and coming to bear against one another in the upper and lower end position of the lifting spindle (44), thereby preventing further rotation of the threaded sleeve (42).

2. Apparatus according to claim 1, **characterized in that** the lifting spindle (44) is configured with two stop discs (51, 52) which are spaced apart from one another and which are provided with profilings (53, 54), between which stop discs (51, 52) the lifting spindle is configured with an external thread (44a), by which it is guided in a threaded bore (42a) of the threaded sleeve (42), and **in that** the threaded sleeve (42) is configured with profilings (49, 50) which are associated with the profilings (53, 54) of the stop discs (51, 52).

3. Apparatus according to one of claims 1 and 2, **characterized in that** the threaded sleeve (42) is configured with axial extensions (47, 48) which are configured with profilings (49, 50).

4. Apparatus according to claim 3, **characterized in that** the mutually facing end faces of the stop discs (51, 52) and of the extensions (47, 48) of the threaded sleeve (42) are configured with radially extending profilings (53, 54, 49, 50) which are provided with stop surfaces (53a, 54a, 49a, 50a) located at least approximately in planes normal to the direction of rotation of the threaded sleeve (42).

5. Apparatus according to one of claims 1 to 4, **characterized in that** the lifting spindle (44) is configured with a securing bolt (45) which is polygonal in cross-section and which is guided in a counter-profiled aperture (46a) of a securing plate (46).

6. Apparatus according to one of claims 1 to 5, **characterized in that** the threaded sleeve (42) is configured as a worm wheel which cooperates with a drive spindle (41) of the drive motor (31).

7. Apparatus according to one of claims 1 to 6, **characterized in that** the electrical winding of the drive motor (31) is configured with a thermal switch located in the supply line of the drive motor (31), which thermal switch is opened when a thermal limit value in the drive motor (31) is exceeded, thereby switching off the drive motor (31).

## Revendications

1. Dispositif pour le déplacement de véhicules de téléphérique (1) dans une installation de téléphérique avec au moins une roue convoyeuse (23) qui est réglable en hauteur au moyen d'une installation de levage (3) par rapport au véhicule de téléphérique (1) pour être amenée en contact avec celui-ci, celui-ci pouvant être déplacé au moyen de l'au moins une roue convoyeuse (23) le long d'une voie de roulement (21), **caractérisé en ce qu'**il est prévu une installation de levage électrique (3) constituée par un moteur d'entraînement électrique (31), par un manchon fileté (42) pouvant être entraîné en rotation par celui-ci et retenu dans sa position en hauteur et par une broche de levage (44) pouvant être déplacée en hauteur par le manchon fileté (42), par laquelle l'au moins une roue convoyeuse (23) peut être réglée en hauteur, dans lequel le manchon fileté (42) et la broche de levage (44) sont munis sur les faces frontales supérieure et inférieure associées l'une à l'autre de butées (49a, 50a, 53a, 54a) situées au moins approximativement dans des plans perpendiculaires au sens de rotation du manchon fileté (42), qui viennent s'appuyer les unes sur les autres dans la position de fin de course supérieure ou inférieure de la broche de levage (44), ce qui empêche la poursuite de la rotation du manchon fileté (42).

2. Dispositif selon la revendication 1, **caractérisé en ce que** la broche de levage (44) est munie de deux disques de butée (51, 52) disposés à distance l'un de l'autre et dotés de profils (53, 54), entre lesquels elle est munie d'un filetage extérieur (44a) avec lequel elle est guidée dans un alésage fileté (42a) du manchon fileté (42), et **en ce que** le manchon fileté (42) est muni de profils (49, 50) associés aux profils (53, 54) des disques de butée (51, 52).

3. Dispositif selon l'une des revendications 1 et 2, **caractérisé en ce que** le manchon fileté (42) est muni de saillies axiales (47, 48) qui sont munies de profils (49, 50).

4. Dispositif selon la revendication 3, **caractérisé en ce que** les faces d'extrémité tournées l'une vers l'autre des disques de butée (51, 52) et des saillies (47, 48) du manchon fileté (42) sont munies de profils (53, 54, 49, 50) qui s'étendent dans le sens radial, munis de surfaces de butée (53a, 54a, 49a, 50a) qui se trouvent au moins approximativement dans des plans perpendiculaires au sens de rotation du manchon fileté (42).

5. Dispositif selon l'une des revendications 1 à 4, **caractérisé en ce que** la broche de levage (44) est munie d'un boulon de sûreté (45) de section polygonale qui est guidé dans une ouverture (46a) profilée de façon correspondante d'une plaque de sûreté (46).

6. Dispositif selon l'une des revendications 1 à 5, **caractérisé en ce que** le manchon fileté (42) est conformé comme une roue hélicoïdale qui coopère avec une broche d'entraînement (41) du moteur d'entraînement (31).

7. Dispositif selon l'une des revendications 1 à 6, **caractérisé en ce que** l'enroulement électrique du moteur d'entraînement (31) est muni d'un thermocontact qui se trouve dans la conduite d'alimentation du moteur d'entraînement (31) et qui est ouvert lorsqu'une valeur limite thermique est dépassée dans le moteur d'entraînement (31), ce qui arrête le moteur d'entraînement (31).
